Europäisches Patentamt

European Patent Office

Office européen des brevets

(19)

(11) Veröffentlichungsnummer : **0 224 083**
B1

(12) **EUROPÄISCHE PATENTSCHRIFT**

(45) Veröffentlichungstag der Patentschrift :
15.03.89

(51) Int. Cl.⁴ : **F 01 D 17/16, F 02 C 6/12**

(21) Anmeldenummer : **86115323.7**

(22) Anmeldetag : **05.11.86**

(54) Abgasturbolader.

(30) Priorität : **23.11.85 DE 3541508**

(43) Veröffentlichungstag der Anmeldung :
**03.06.87 Patentblatt 87/23**

(45) Bekanntmachung des Hinweises auf die Patenterteilung : **15.03.89 Patentblatt 89/11**

(84) Benannte Vertragsstaaten :
**AT DE FR GB IT**

(56) Entgegenhaltungen :
**EP--A-- 0 204 033**
**DE--A-- 3 235 538**
**DE--B-- 1 071 420**
**DE--C-- 964 551**
**DE--C-- 3 325 756**
**GB--A-- 304 638**
**US--A-- 3 957 392**
**US--A-- 4 107 927**

(73) Patentinhaber : **A.G. Kühnle, Kopp & Kausch**
**Postfach 265 Hessheimer Strasse 2**
**D-6710 Frankenthal/Pfalz (DE)**

(72) Erfinder : **Engels, Bertold, Dr.- Ing.**
**Parkweg 7**
**D-6714 Weisenheim/Sand (DE)**
Erfinder : **Hemer, Hans-Josef**
**Gaugasse 6**
**D-6520 Worms 24 (DE)**
Erfinder : **Lingenauber, Robert, Dipl.-Ing.**
**Eppsteiner Strasse 31**
**D-6710 Frankenthal (DE)**

(74) Vertreter : **Klose, Hans, Dipl.-Phys. et al**
**Kurfürstenstrasse 32**
**D-6700 Ludwigshafen (DE)**

EP 0 224 083 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft einen Abgasturbolader mit einer Turbine, deren Leitapparat einen Kranz von konzentrisch um eine Rotorachse angeordneten und zwischen jeweils zwei Endbegrenzungen schwenkbaren Leitschaufeln aufweist, mit einem ersten, auf der Seite eines Lagergehäuses angeordneten Haltering, in welchem die Laufschaufeln jeweils mit einem ersten Zapfen gelagert sind, wobei die Leitschaufeln jeweils mit ihren zweiten Zapfen auf der Seite des Turbinengehäuses gelagert sind, und mit einer Verstelleinrichtung zur Einstellung einer der Endbegrenzungen, wobei die Leitschaufeln unter den Strömungskräften in einem mittels der Endbegrenzungen vorgegebenen Einstellwinkelbereich frei schwenkbar sind und wobei der Leitapparat und die Verstelleinrichtung eine Baugruppe bilden.

In der DE-PS 33 25 756 ist ein Abgasturbolader beschrieben, dessen Leitschaufeln unter den Strömungskräften in einem mittels der Endbegrenzungen vorgegebenen Einstellwinkelbereich frei schwenkbar sind. Für das Einstellen der einen Endbegrenzung ist ein Verstellring vorgesehen, der einen Teil der Wand des Strömungskanales bildet und sägezahnförmige Auflageflächen für die freien Enden der Leitschaufeln aufweist. Innerhalb der derart vorgegebenen Grenzen erfolgt im Teillastbereich eine automatische Einstellung der Leitschaufeln entsprechend der Strömung, um Spalt- und Stoßverluste zu reduzieren. Bei Erhöhung der Belastung stellen sich die Leitschaufeln auf den durch die Endbegrenzung vorgegebenen größtmöglichen Winkel selbst ein. Die Einstellung der Endbegrenzung erfolgt insbesondere nach der Ladedruckcharakteristik. Die Fertigung und Montage erfordert einen nicht unerheblichen Aufwand. Zunächst werden die Leitschaufeln mit ihren Zapfen in entsprechende Bohrungen des Turbinengehäuses einzeln eingesetzt. Nachfolgend erst konnte die Baugruppe mit dem Turbinengehäuse verbunden werden.

Aus der UP-PS 44 03 913 ist ein Austrittsleitapparat eines Verdichters bekannt, bei welchem von einem Verdichterrad die Luft radial nach außen durch den Leitapparat in einen spiralförmigen Diffusor gefördert wird. Die Leitschaufeln des Leitapparates sind jeweils nur auf der einen Seite gelagert. Eine derartige Lagerung der Leitschaufeln kann bei einem Verdichter vorgesehen werden, da im Vergleich mit einer Abgasturbine erheblich geringere mechanische und thermische Beanspruchungen auftreten. Der Leitapparat für die Turbine eines Abgasturboladers erfordert eine zweiseitige Lagerung der Leitschaufeln.

In der UP-PS 41 79 247 ist ein Turbolader beschrieben, der eine Verstelleinrichtung für die Leitschaufeln aufweist. Die Leitschaufeln sind zwangsgeführt und die Verstelleinrichtung enthält eine Vielzahl von Einzelbauteilen, die eine aufwendige Konstruktion und einen hohen Montageaufwand erfordern. Es besteht die Gefahr von Störungen, zumal infolge der hohen Betriebstemperatur ein Klemmen und Verziehen in der Praxis nur schwer zu vermeiden ist. Die Verstelleinrichtung erfordert ein relativ großes Bauvolumen; Kühlkanäle können in diesem den heißen Abgasen ausgesetzten Bereich nicht vorgesehen werden. Ferner ergeben sich Schwierigkeiten im Hinblick auf eine sichere Abdichtung der Schaufelwellen, die aus dem Strömungskanal nach außen geführt sind.

Der Erfindung liegt die Aufgabe zugrunde, den Abgasturbolader der genannten Art dahingehend weiterzubilden, daß bei einfacher Konstruktion und bei platzsparender Bauweise eine funktionsgerechte Verstellbarkeit der einen Endbegrenzung für die Leitschaufeln ermöglicht wird. Aufwendige Verstelleinrichtungen, die insbesondere in Richtung zur Welle ein großes Bauvolumen erfordern, sollen vermieden werden. Weiterhin soll bei geringem Fertigungsaufwand einem einfache und gegebenenfalls auch Automaten gerechte Montage ermöglicht werden. Eine kompakte und gewichtssparende Konstruktion und ferner eine hohe Funktionssicherheit sollen erreicht werden. Schließlich soll mit wenigen und robusten Einzelteilen eine hohe Betriebssicherheit gewährleistet werden, wobei eine funktionsgerechte Anpassung an die betrieblichen Anforderungen sowie Einbaubedingungen möglich sein soll.

Zur Lösung dieser Aufgabe wird vorgeschlagen, daß die Baugruppe einen zweiten Haltering aufweist, der dem Turbinengehäuse zugeordnet ist und zur Lagerung der zweiten Zapfen der Leitschaufeln dient, daß die Baugruppe einen Innendurchmesser aufweist, der größer ist als der Außendurchmesser des Turbinenrades, und daß die beiden Halteringe axial beabstandet mittels Verbindungselementen unter Bildung des Strömungskanales sowie zur Aufnahme der Leitschaufeln miteinander verbunden sind.

Der erfindungsgemäße Abgasturbolader zeichnet sich durch eine einfache und funktionsgerechte Konstruktion aus, wobei die Baugruppe einschließlich der Leitschaufeln vollständig vorgefertigt werden kann. Bei der Montage wird die vorgefertigte Baugruppe mit dem Turbinengehäuse bzw. dem Lagergehäuse problemlos verbunden. Über den zweiten Haltering sind die Leitschaufeln vollständig in die Baugruppe integriert und sie müssen beim Zusammenbau von Baugruppe und Turbinengehäuse nicht einzeln mit ihren Zapfen in das Turbinengehäuse eingesetzt werden. Die Halteringe dienen zur Lagerung der Leitschaufeln und sind mittels Verbindungselementen unmittelbar miteinander verbunden. Trotz großer Wärmedehnungen im Bereich des Strömungskanales können enge Toleranzen eingehalten werden, wodurch der Wirkungsgrad verbessert werden kann. Die beiden Halteringe können in der Baugruppe sehr exakt zueinander ausgerichtet sein, so daß zur Erzielung einer definierten Strömungsführung im Leitapparat Spalte zwischen den Leitschaufeln und dem Halteringen, welche die Begrenzungswände des Strömungskanales bilden, klein gehalten werden können. Da ferner die beiden Halteringe weitgehend das gleiche Wärmeverhalten aufweisen, und zweckmäßig aus dem gleichen Werkstoff bestehen und in etwa die gleiche Größe aufweisen, ist auch bei schnellen Temperaturänderungen ein Festsetzen der Leitschaufeln nicht zu befürchten. Eine hohe Funktionssicherheit wird erreicht. Da die vollständig vormontierte Baugruppe einen Innendurchmesser aufweist, der größer ist als der Außendurchmesser des Turbinenrades, kann bei der Montage zunächst die Verbindung mit dem Turbinengehäuse erfolgen, um nachfolgend gemeinsam mit diesem auf das ebenfalls vorgefertigte und einschließlich des Turbinenrades vormontierte Lagergehäuse aufgeschoben werden. Hieraus ergeben sich Vorteile für die Großserienfertigung und insbesondere im Hinblick auf die Fertigung mittels Automaten. Aufgrund des geringen Platzbedarfes können im Lagergehäuse Kühlkanäle vorgesehen werden, die vor allem im Hochtemperaturbereich von besonderer Bedeutung sind. Die Baugruppe bzw. deren Ringe können im Rahmen der Erfindung einen vergleichsweise großen Innendurchmesser aufweisen, so daß radial innenliegend die Kühlkanäle im Lagergehäuse angeordnet werden können. Über die Baugruppe kann die Verbindung von Lagergehäuse und Turbinengehäuse erfolgen, wobei problemlos die gewünschte Winkelstellung entsprechend den Einbaubedingungen des Abgasturbolader vorgeben werden kann.

In einer besonderen Ausgestaltung sind der Haltering, und der Trägerring, insbesondere mittels Schrauben fest verbunden, wobei der Verstellring zumindest teilweise zwischen diesen Ringen angeordnet ist. Es sind relativ einfach aufgebaute Bauteile in die Baugruppe integriert, wobei der für die Befestigung und Lagerung der Leitschaufeln vorgesehene Haltering gleichzeitig auch zur axialen Abfangung des Verstellringes dient. Es sei an dieser Stelle ausdrücklich festgehalten, daß der Haltering und insbesondere der Verstellring, bzw. der Trägerring gegebenenfalls im Rahmen dieser Erfindung auch als Segmente ausgebildet sein können, die in geeigneter Weise miteinander verbunden sind. Wesentlich ist die einfache Geometrie dieser Ringe bzw. Segmente im Hinblick auf einen geringen Fertigungsaufwand. Der Verstellring und die beiden Halteringe bestehen aus einem hochtemperaturfesten Werkstoff und können im Rahmen dieser Erfindung auch aus Keramik gefertigt sein. Die kompakte und robuste Bauweise der Ringe ermöglicht die Fertigung aus Keramik. Wesentlich ist, daß die Ringe jeweils mit axialen Stirnflächen aneinander liegen bzw. aufeinander abgestützt sind, wodurch eine gute Bearbeitbarkeit gewährleistet wird. Wesentlich ist insoweit auch die funktionsgerechte Abdichtung der einzelnen Ringe der Baugruppe sowie deren Abdichtung bezüglich Lagergehäuse und Turbinengehäuse. Die Baugruppe wird erfindungsgemäß mittels Druckringen und Schrauben oder dergleichen mit dem Turbinengehäuse bzw.

mit dem Lagergehäuse verbunden.

In einer wesentlichen Ausgestaltung ist innerhalb der Baugruppe ein Teil des Lagergehäuses mit einem Kühlkanal angeordnet. Aufgrund des einfachen und robusten Aufbaues der Baugruppe benötigt diese einen geringen Platzbedarf, so daß der Innendurchmesser im Hinblick einerseits auf das Turbinenrad und andererseits auf den Kühlkanal des Lagergehäuses einen entsprechend großen Innendurchmesser aufweisen kann. Eine hohe Betriebssicherheit wird gewährleistet. Wesentlich ist ferner, daß die Baugruppe und insbesondere eine Konsole und/oder der Stellmotor, welche in die Baugruppe integriert sind, in jeder vorgebbaren Winkelstellung zwischen 0 und 360° um die Rotorwelle bezüglich des Lagergehäuses und/oder Turbinengehäuses angeordnet werden können. Damit erfolgt in überaus einfacher Weise eine Anpassung an die jeweiligen Einbaubedingungen im Motorraum eines Fahrzeuges. Je nach Motorkonstruktion kann also der Stellmotor an die günstigste Position gedreht werden, ohne daß hierzu besondere Änderungen am Abgasturbolader notwending werden. Die Konsole zur Befestigung des Stellmotors ist erfindungsgemäß integraler Bestandteil der Baugruppe und insbesondere deren Trägerring.

In einer besonders wesentlichen Ausgestaltung weist die Baugruppe zwei Halteringe für die Leitschaufeln auf, wobei der dem Turbinengehäuse zugeordnete Haltering berührungsfrei bezüglich desselben angeordnet ist. Der dem Turbinenghäuse zugeordnete Haltering begrenzt den Strömungskanal und bildet gleichzeitig eine Wand desselben. Aufgrund der berührungslosen Anordnung bezüglich des Turbinengehäuses können Wärmedehnungen problemlos ausgeglichen werden. Eine funktionsgerechte und einfache Fertigung ist möglich, da die Leitschaufeln ebenso wie die Halteringe in die Baugruppe im Rahmen dieser Erfindung integriert sind. Die Leitschaufeln brauchen bei der Montage somit nicht mehr einzeln in das Turbinengehäuse oder entsprechende Bauteile desselben eigesetzt zu werden.

In einer wesentlichen Ausgestaltung der Erfindung weist die Verstelleinrichtung wenigstens einen Hebel auf, der über einen Schlepphebel an den Verstellring gekoppelt ist. Dieser Schleppoder Koppelhebel gewährleistet bei einfacher Konstruktion eine zuverlässige Verstellung, ohne daß ein Festsetzen zu befürchten ist. Die Verstelleinrichtung weist nur wenige und robust augebildete Bauteile auf, so daß Funktionsstörungen infolge von Wärmedehnungen, vermieden werden. Erfindungsgemäß ist die Welle, um welche der Hebel schwenkbar gelagert ist, parallel zur Rotorachse angeordnet und/oder der Schlepphebel ist in einer Ausnehmung des Verstellringes angeordnet und dort an den Verstellring angelenkt. Als wesentliche Bestandteile enthält die Verstelleinrichtung somit den um die Welle schwenkbar angeordneten Hebel sowie den an den Verstellring angelenkten Schlepphebel. Die Verbindung zum Stellmotor erfolgt im Rahmen dieser Erfindung über einen weiteren Hebel, der drehfest mit der Welle bzw. dem erstgenannten Hebel verbunden ist. Dieser weitere Hebel ist an den Stellmotor angelenkt, und zwar insbesondere an dessen Hubstange.

Der Verstellring ist in der Baugruppe, und zwar insbesondere auf den Trägerring derselben mittels eines Rollenlagers oder auch Gleitlagers sowohl radial als auch axial abgestützt. Im Rahmen der Erfindung werden die Lagerflächen, und insbesondere die des Gleitlagers, mit einer hohen Oberflächenhärte versehen. Dies erfolgt erfindungsgemäß durch eine besondere Beschichtung, und zwar insbesondere mittels Titannitrid. Besteht der Trägerring sowie der Verstellring erfindungsgemäß aus Keramik, so wird die Oberflächenhärte durch die Werkstoffauswahl selbst bedingt. Infolge der hohen Oberflächenhärte wird zuverlässig vermieden, daß sich von der Turbine her Schmutzpartikel in den Lageroberflächen festsetzen und Funktionsstörungen verursachen. Die Oberflächenhärte wird derart vorgegeben, daß die zu erwartenden Schmutzpartikel zwischen den Lagerflächen zerrieben werden.

Die Erfindung wird nachfolgend anhand des in der Zeichnung dargestellten Ausführungsbeispieles näher erläutert. Es zeigen :

Fig. 1 Einen axialen Längsschnitt durch die Turbine und einen Teil des Lagergehäuses eines Abgasturboladers,

Fig. 2 vergrößert einen Schnitt bzw. Ansicht entlang der Linie II,

Fig. 3 vergrößert eine perspektivische Teilansicht des Verstellringes und des Halteringes, und zwar für den größten Einstellwinkelbereich,

Fig. 4 eine Teilansicht ähnlich Fig. 3, wobei jedoch die Leitschaufeln den Strömungskanal absperren,

Fig. 5 eine perspektivische Ansicht einer Leitschaufel.

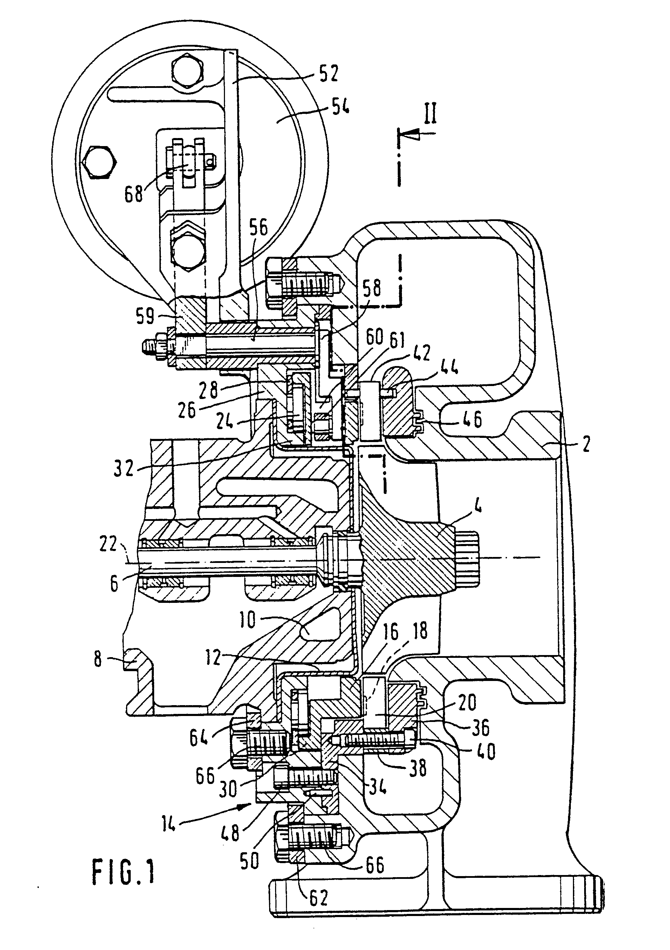

Fig. 1 zeigt ein Turbinengehäuse 2, in dessen Inneren sich ein Turbinenrad 4 befindet, welches in bekannter Weise mit einer Welle 6 verbunden und mittels dieser im Lagergehäuse 8 gelagert ist. Das Lagergehäuse 8 enthält einen Kühlkanal 10, der insbesondere von Wasser durchströmt ist. Mittels eines topfförmig gebogenen Bleches bzw. Wärmeschildes 12 erfolgt eine Abschirmung des Lagergehäuses 8 gegenüber dem von den heißen Abgasen durchströmten Turbinengehäuse 2.

Zwischen dem Turbinengehäuse 2 und dem Lagergehäuse 8 ist eine Baugruppe 14 angeordnet, die als eine im wesentlichen ringförmige Kartusche ausgebildet ist. Die Baugruppe 14 enthält den Verstellring 16, welcher in den Strömungskanal hineinragende Vorsprünge 18 aufweist. Diese Vorsprünge 18 sind in Umfangsrichtung betrachtet sägezahnförmig bzw. profiliert ausgebildet und enthalten die Auflageflächen, wobei jeweils ein Vorsprung einer der Leitschaufeln 20 zugeordnet ist. Der Verstellring 16 ist in der Baugruppe 14 bezüglich der Rotorachse 22 derart drehbar, daß entsprechend über die Vorsprünge 18 die eine Endbegrenzung und somit der Einstellwinkelbereich für die Leitschaufeln 20 vorgegeben ist.

Der Verstellring 16 ist mittels Rollen 24 bezüglich eines Trägerringes 26 drehbar gelagert. Es ist über den Umfang verteilt eine Anzahl, insbesondere vier, derartige Rollen 24 angeordnet, mittels welchen sowohl die axiale als auch die radiale Abstützung des Verstellringes 16 erfolgt. Die Rollen 24 werden mittels eines Lagerkäfigs, der entsprechende Halterungen 28 aufweist, über den Umfang in dem gewünschten Winkelabstand gehalten. Der Verstellring 16 weist einen gestuften Querschnitt auf, wobei ein axialer Ansatz 30 zur radialen Auflagerung der Rollen 24 dient. Radial innenliegend weist der Trägerring 26 einen koaxialen Bund 32 zur Auflagerung der Rollen 24 auf. Ein in der Turbine anstehender Druck bewirkt eine Axialkraftkomponente auf den Verstellring 16, welcher über die axialen Stirnflächen der Rollen 24 von dem Trägerring 26 aufgenommen wird. Der Verstellring 16 und der Trägerring 26 und die Baugruppe 14 insgesamt weisen einen Innendurchmesser auf, der größer ist als der Außendurchmesser des Turbinenrades 4. Bei der Montage kann daher die Baugruppe problemlos über das Turbinenrad 4 auf das Lagergehäuse 8 geschoben werden. Wesentlich ist darüberhinaus, daß aufgrund des relativ großen Innendurchmessers der Baugruppe 14 das Lagergehäuse 8 radial innenliegend den Kühlkanal 10 aufweist, der im Hinblick auf den Hochtemperaturbetrieb von besonderer Bedeutung ist.

In einer alternativen, hier nicht weiter dargestellten Ausführung ist der Verstellring 16 in dem Trägerring 26 direkt über ein Gleitlager gelagert. Die oben erläuterten Rollen samt Lagerkäfig entfallen. Der Verstellring liegt insbesondere über axiale Stirnflächen sowie zur Rotorachse 22 koaxiale Umfangsflächen an dem Trägerring an. Ferner können im Rahmen dieser Erfindung auch kombinierte Axial- und Radiallager vorgesehen werden. Ferner können die Lager separate Rollen, Kugeln oder allgemein Wälzkörper aufweisen, um zum einen die Axialkräfte und zum anderen getrennt hiervon Radialkräfte zu übertragen. So können die oben erläuterten Rollen mit einer zentralen Bohrung versehen sein, in welche jeweils eine Kugel angeordnet ist, wobei erfindungsgemäß die Rollen nur die Radiallagerung und die Kugeln die Axiallagerung übernehmen. Gegebenenfalls können auch über den Umfang verteilt abwechselnd Rollen für die Radialkräfte und die Axialkräfte angeordnet werden. Wesentlich ist bei allen Ausführungsformen eine hohe Oberflächenhärte der Lagerflächen von Verstellring und Trägerring. Von der Turbine in den Lagerbereich evtl. gelangende Schmutzpartikel werden aufgrund der hohen Oberflächenhärte zerrieben und können sich folglich nicht in die Oberflächen eingraben. Eine hohe Funktionssicherheit und eine hohe Lebensdauer werden gewährleistet.

Die Baugruppe 14 enthält ferner einen ersten und einen zweiten Haltering 34, 36 für die Leitschaufeln 20. Axial zwischen den Halteringen 34, 36 befinden sich die Leitschaufeln 20 und der Strömungskanal, wobei mittels Distanzhülsen 38 der axiale Abstand der beiden Halteringe definiert ist. Die beiden Halteringe 34, 36 sind mit einer Anzahl über den Umfang verteilten Schrauben 40, welche jeweils eine Distanzhülse 38 durchgreifen, miteinander verbunden. Die Leitschaufeln 20 sind mittels im Bereich der Anströmkanten 42 angeordneten Zapfen 44 in entsprechenden axialen Bohrungen der Halteringe 34, 36 schwenkbar gelagert. Mit den Distanzhülsen 38 wird die Weite des Strömungskanales erfindungsgemäß derart definiert, daß einerseits die Leitschaufeln 20 frei schwenkbar sind und andererseits die Spalte zwischen den axialen Stirnseiten der Schaufeln und den beiden Halteringen 34, 36 nicht zu groß sind.

Der zweite Haltering 36 ist im Rahmen der Erfindung berührungslos zum Turbinengehäuse 2 angeordnet, wobei mittels einer Labyrinthdichtung 46 eine zuverlässige Abdichtung gewährleistet wird. Für die Labyrinthdichtung enthält der zweite Haltering 36 z.B. zwei koaxiale Ringe, die in entsprechende Ringnuten des Turbinengehäuses 2 eingreifen. Die berührungsfreie Anordnung des Halteringes in dem Turbinengehäuse 2 gewährleistet in zuverlässiger Weise den Ausgleich von Wärmedehnungen, wobei auch im Rahmen der Erfindung vergleichweise enge Spalte zwischen den Leitschaufeln und den Halteringen 34, 36, welche gleichzeitig die Wände des Strömungskanales bilden, eingehalten werden. Anstelle der gezeigten Labyrinthdichtung können auch andere ein-oder mehrstufige Labyrinthdichtungen vorgesehen werden, wobei hier insbesondere auf spitze Labyrinthdichtungen verwiesen sei, die beispielsweise bei Dampfturbinen zum Einsatz gelangen. Die Leitschaufeln 20 werden mit der Baugruppe 14 vormontiert und dann insgesamt in einem einzigen Arbeitsgang mit dem Turbinengehäuse 2 verbunden. Die Integration nicht nur des ersten Halteringes 34 und des gegenüberliegenden zweiten Halteringes 36, der erfindungsgemäß die gegenüberliegende Wand des Strömungskanales bildet, verhindert zuverlässig das Klemmen der Leitschaufeln 20 infolge von Montagespannungen oder des Wärmeflusses. Es wird eine hohe Betriebssicherheit durch wenige, robuste Bauteile erreicht. Die mit einfacher Geometrie und im Rahmen der Erfindung auch aus Keramik zu fertigenden wesentlichen Bestandteile der Baugruppe 14, und zwar der Verstellring 16, der Trägerring 26 und die beiden Halteringe 34, 36 werden in einfacher Weise mittels Schrauben 48 oder ähnlichen Verbindungsmitteln miteinander verbunden, wobei mittels Zentrierstiften 50 mit hoher Genauigkeit die gegenseitige Ausrichtung gewährleistet wird. Der einen gestuften Querschnitt aufweisende Verstellring 16 ist in axialer Richtung zwischen den Trägerring 26 und den Haltering 34 eingebaut, wobei ein hinreichendes axiales Spiel vorgegeben ist, daß auch bei den hohen Temperaturen ein Festsetzen vermieden wird.

Der Trägerring 26 weist eine Konsole 52 auf, an welcher ein hier nicht weiter zu erläuternder Stellmotor 54 befestigt ist. Die Baugruppe 14 einschließlich der integrierten Konsole für den Stellmotor 54 können zur Anpassung an die Einbaubedingungen in jeder beliebigen Winkelstellung bezüglich des Lagergehäuses und/oder des Turbinengehäuses 2 mit diesen verbunden sein. Der Stellmotor 54 wird insbesondere vom Ladedruck beaufschlagt, um über eine Welle 56 und einen Hebel 58 den Verstellring 16 in die gewünschte Winkelstellung zu bringen. Der Stellmotor 54 ist mit einer Hubstange 68 an einen weiteren Hebel 59 angelenkt, der mit der Welle 56 drehfest verbunden ist. Die welle 56 liegt parallel zur Rotorachse 22 und ist in dem Trägerring 26 gelagert. Über die Welle 56 wird also das Drehmoment bzw. die Verstellbewegung von außen in die Baugruppe 14 auf den Verstellring 16 eingeleitet. Der Hebel 58 ist über einen Schlepphebel 61, der in der Ausnehmung 60 des Verstellringes vorgesehen ist, an diesen angelenkt und mit diesem gekoppelt. Der Verstellring 16 weist eine Ausnehmung 60 auf, in welche der Hebel 58 eingreift. Die Baugruppe 14 ist über einen Druckring 62 mit dem Turbinengehäuse 2 und über Drucksegmente 64 mit dem Lagergehäuse 8 verbunden. Der Druckring 62 bzw. die Drucksegmente 64 sind mittels Schrauben 66 mit dem Turbinengehäuse 2 bzw. dem Trägerring 26 verbunden und übergreifen entsprechende Auflagerungen der Baugruppe 14 bzw. des Lagergehäuses 8.

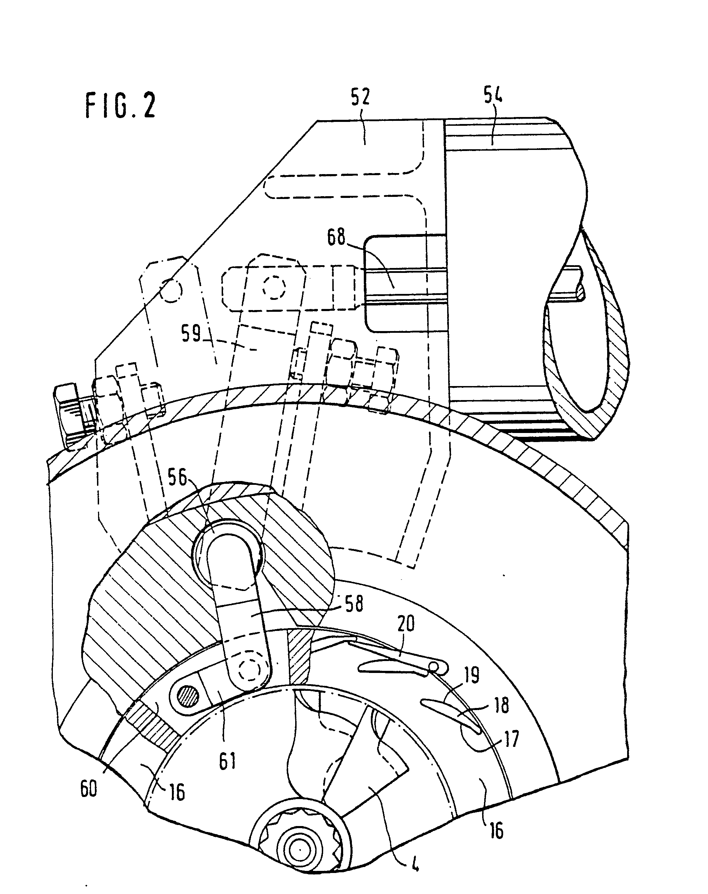

Fig. 2 zeigt vergrößert teilweise im Schnitt und teilweise in einer Ansicht die wesentlichen Bestandteile der Verstelleinrichtung zur Einleitung der Verstellbewegung des Verstellringes 16. Vom Stellmotor 52 ist die Hubstange 68 zu erkennen, an welcher der weitere Hebel 59 angelenkt ist. Die Lagerung der Welle 56 im Trägerring stellt ein festes Lager für den mit der Welle 56 drehfest verbundenen Hebel 59 dar. Die in der Zeichnung obere Anlenkung vom Hebel 59 an die Hubstange 68 ist also auf einer Kreisbahn um die Welle 56 in die in der Zeichnung links strichpunktiert angedeutete andere Endstellung bewegbar. Die Hubstange 68 ist in dem Stellmotor bzw. Stellzylinder insoweit bewegbar geführt. Der zum Hebel 59 axial beabstandet angeordnete Hebel 58 kann mit der Welle 56 aus einem einzigen Stück gefertigt sein oder ist mit dieser drehfest verbunden. Die beiden Hebel 58, 59 weisen somit zueinander immer die gleiche Winkellage auf. Es ist nunmehr in der Ausnehmung 60 das Koppelstück bzw. der Schlepphebel 61 zu erkennen, über welchen die Verbindung zum Verstellring 16 erfolgt. Der Schlepphebel 61 ist über einen Zapfen oder dergleichen an den Verstellring 16 gekoppelt.

Der Einfachheit halber ist nur eine Leitschaufel 20 dargestellt, die ebenso wie die anderen Leitschaufeln den Strömungskanal im wesentlichen absperren. Die Leitschaufel 20 liegt mit ihrem freien Ende an der inneren Anlagefläche 17 des profilierten Vorsprunges 18 vom Verstellring 16 an. Im Rahmen dieser Erfindung bilden die inneren Anlageflächen 17 die zweite Endbegrenzung für die Leitschaufeln 20. Die erste Endbegrenzung wird durch die radial außen an den Vorsprüngen 18 angeordneten Auflageflächen 19 gebildet. Im Rahmen dieser Erfindung wird durch entsprechende Profilierung und Formgebung der Vorsprünge 18 sowie deren innere Anlagefläche 17 und äußere Auflagefläche 19 entsprechend der jeweiligen Drehwinkelstellung des Verstellringes 16 der Einstellwinkelbereich vorgegeben. Durch die innere Anlagefläche 17 erfolgt eine definierte Vorgabe der zweiten Endbegrenzung und das Anlegen oder gar ein Klemmen des freien Schaufelendes an der benachbarten Leitschaufel wird verhindert.

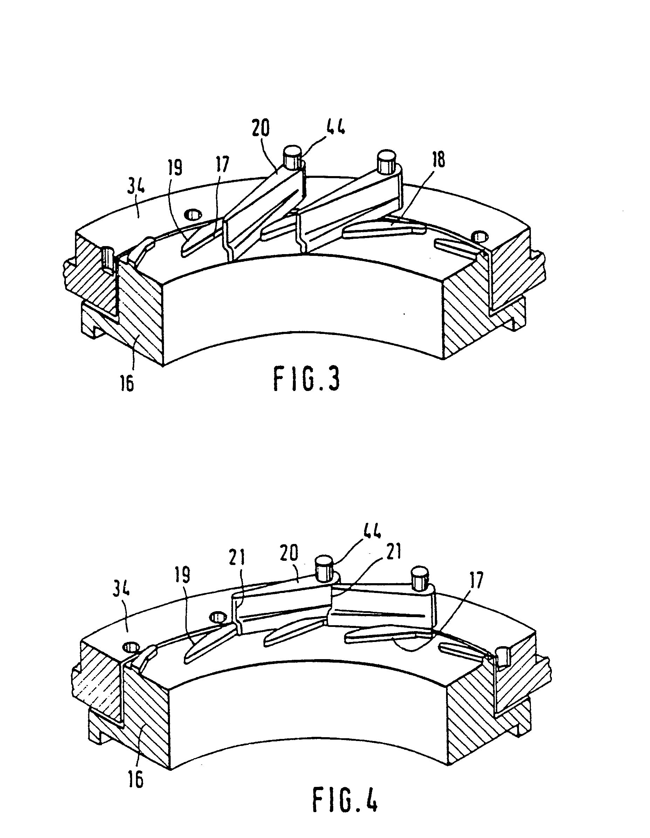

Fig. 3 zeigt vergrößert und perspektivisch eine Teilansicht des Verstellringes 16 und des ersten Halteringes 34 mit den Sackbohrungen für die Lagerzapfen der Leitschaufeln 20. Der Verstellring 16 ist bezüglich des ersten Halteringes 34 in der Winkelstellung dargestellt, in welcher die Leitschaufeln 20 den Strömungskanal praktisch vollständig freigeben. Auch die profilierten Vorsprünge 18 beeinträchtigen den freien Strömungsquerschnitt nicht. Die Lagerzapfen 44 der Leitschaufeln 20 sind in entsprechenden Sackbohrungen des aus Gründen der Übersichtlichkeit hier nicht dargestellten zweiten Halteringes, gelagert.

Fig. 4 zeigt eine perspektivische Ansicht ähnlich Fig. 3, wobei jedoch der Verstellring 16 bezüglich des ersten Halteringes 34 in der Weise gedreht wurde, daß der Strömungsquerschnitt durch die Leitschaufeln 20 abgeschlossen ist. Die Leitschaufeln 20 sind im Rahmen dieser Erfindung auf der dem Verstellring 16 zugewandten Längsseite 23 radial nach innen abgekröpft. Damit wird gewährleistet, daß einerseits die Leitschaufeln 20 definiert an der inneren Anlagefläche 17 des zugeordneten Vorsprunges 18 anliegen und andererseits zwischen dem freien Ende 21 und der benachbarten anderen Leitschaufel 20 kein Spalt mehr vorhanden ist.

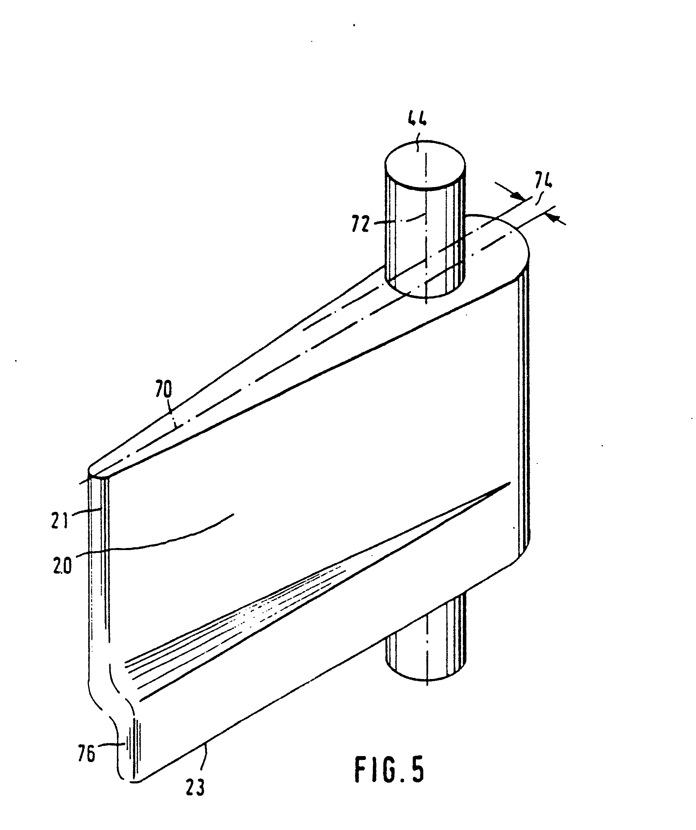

Fig. 5 zeigt in Vergrößerung eine perspektivische Ansicht einer der Leitschaufeln 20. Bei dieser wesentlichen Ausführungsform ist die Drehachse der beiden Zapfen 44 bezüglich einer Mittenebene 70 um einen Abstand 74 in radialer Richtung nach außen versetzt. Liegt die Leitschaufel 20 an der inneren Anlagefläche des zugeordneten Vorsprunges an, so kann aufgrund dieser erfindungswesentlichen, nach außen versetzten Anordnung der Lagerzapfen 44 der Strömungskanal dicht abgeschlossen werden. Ferner ist an der Längsseite 23 der in bezug auf die Mittenebene 70 radial nach innen abgewinkelte Teil 76 der Leitschaufel 20 gut zu erkennen.

Bezugszeichenliste

2 Turbinengehäuse
4 Turbinenrad
6 Welle
8 Lagergehäuse
10 Kühlkanal
12 Wärmeschild
14 Baugruppe
16 Verstellring
17 innere Anlagefläche/Endbegrenzung

18 Vorsprung
19 äußere Anlagefläche/Endbegrenzung
20 Leitschaufel
21 freies Ende
22 Rotorachse
23 Längsseite
24 Rolle
26 Trägerring
28 Lagerkäfig
30 Ansatz
32 Bund von 26
34, 36 Haltering
38 Distanzhülse
40 Schraube
42 Anströmkante
44 Leitschaufelzapfen
46 Labyrinthdichtung
48 Schraube
50 Zentrierstift
52 Konsole
54 Stellmotor
56 Welle
58, 59 Hebel
60 Ausnehmung
61 Schlepphebel
62 Druckring
64 Drucksegment
66 Schraube
68 Hubstange
70 Mittenebene
72 Drehachse
74 Abstand
76 Teil von 20

**Patentansprüche**

1. Abgasturbolader mit einer Turbine, deren Leitapparat einen Kranz von konzentrisch um eine Rotorachse (22) angeordneten und zwischen jeweils zwei Endbegrenzungen (17, 19) schwenkbaren Leitschaufeln (20) aufweist, mit einem ersten auf der Seite eines Lagergehäuses (8) angeordneten Haltering (34), in welchem die Laufschaufeln (20) jeweils mit einem ersten Zapfen gelagert sind, wobei die Leitschaufeln jeweils mit ihrem zweiten Zapfen (44) auf der Seite des Turbinengehäuses (2) gelagert sind, und mit einer Verstelleinrichtung zur Einstellung einer der Endbegrenzungen (17, 19), wobei die Leitschaufeln (20) unter den Strömungskräften in einem mittels der Endbegrenzungen vorgegebenen Einstellwinkelbereich frei schwenkbar sind und wobei der Leitapparat und die Verstelleinrichtung eine Baugruppe (14) bilden, dadurch gekennzeichnet, daß die Baugruppe (14) einen zweiten Haltering (36) aufweist, der dem Turbinengehäuse (2) zugeordnet ist und zur Lagerung der zweiten Zapfen (44) der Leitschaufeln (20) dient, daß die Baugruppe (14) einen Innendurchmesser aufweist, der größer ist als der Außendurchmesser des Turbinenrades (4), und daß die beiden Halteringe (34, 36) axial beabstandet mittels Verbindungselementen (38, 40) unter Bildung des Strömungskanales sowie zur Aufnahme der Leitschaufeln (20) miteinander verbunden sind.

2. Abgasturbolader nach Anspruch 1, dadurch gekennzeichnet, daß die Baugruppe (14) einen mit dem ersten Haltering (34), bevorzugt mittels Schrauben (48), fest verbundenen Trägerring (26) aufweist, auf welchem ein Verstellring (16) gelagert ist.

3. Abgasturbolader nach Anspruch 1 oder 2, dadurch gekennzeichnet, daß der dem Turbinengehäuse (2) zugeordnete zweite Haltering (36) berührungsfrei bezüglich des Turbinengehäuses (2) angeordnet ist.

4. Abgasturbolader nach einem der Ansprüche 1 bis 3, dadurch gekennzeichnet, daß zwischen dem Turbinengehäuse (2) und dem zweiten Haltering (36) eine berührungslose Labyrinthdichtung (46) vorgesehen ist.

5. Abgasturbolader nach Anspruch 2, dadurch gekennzeichnet, daß der Verstellring (16) Vorsprünge (18) mit radial nach innen gerichteten Anlageflächen (17) und radial nach außen weisenden Auflageflächen (19) aufweist, wobei jeweils von zwei in Umfangsrichtung benachbarten Vorsprüngen (18) die innere Auflagefläche (17) und die äußere Auflagefläche (19) die beiden definiert verstellbaren Endbegrenzungen zur Vorgabe des Einstellwinkelbereiches bilden.

6. Abgasturbolader nach Anspruch 5, dadurch gekennzeichnet, daß die mit der inneren Anlagefläche (17) sowie der äußeren Auflagefläche (19) versehenen Vorsprünge (18) an der axialen Stirnseite des Verstellringes (16) in Umfangsrichtung beabstandet angeordnet sind, wobei zwischen den Vorsprüngen die axiale Breite des Strömungskanales im wesentlichen gleich bleibt.

7. Abgasturbolader nach Anspruch 5 oder 6, dadurch gekennzeichnet, daß die Leitschaufeln (20) an ihren dem Verstellring (16) zugewandten Längsseiten (23) zumindest an den Enden (21) radial nach innen zur Rotorachse (22) abgewinkelt sind.

8. Abgasturbolader nach einem der Ansprüche 1 bis 7, dadurch gekennzeichnet, daß radial innerhalb der Baugruppe (14) ein Teil des Lagergehäuses (8) mit einem Kühlkanal (10) angeordnet ist.

9. Abgasturbolader nach einem der Ansprüche 1 bis 8, dadurch gekennzeichnet, daß das Turbinengehäuse (2) über die Baugruppe (14) mit dem Lagergehäuse (8) verbunden ist.

10. Abgasturbolader nach einem der Ansprüche 1 bis 9, dadurch gekennzeichnet, daß die beiden Halteringe (34, 36) mittels Schrauben (40) sowie Distanzhülsen (38), welche im Strömungskanal angeordnet sind, miteinander verbunden sind.

11. Abgasturbolader nach einem der Ansprüche 2, 5, 6, 7, dadurch gekennzeichnet, daß der Trägerring (26) eine insbesondere integral verbundene Konsole (52) für einen Verstellmotor (54) der Verstelleinrichtung aufweist.

12. Abgasturbolader nach einem der Ansprüche 2, 5, 6, 7, 11, dadurch gekennzeichnet, daß der Verstellring (16) einen gestuften Querschnitt aufweist und mittels Wälzkörpern (24) oder eines Gleitlagers axial und/oder radial auf dem Trägerring (26) gelagert ist.

13. Abgasturbolader nach einem der Ansprüche 2, 5, 6, 7, 11, 12, dadurch gekennzeichnet, daß die Verstelleinrichtung wenigstens einen Hebel (58) aufweist, der in eine Ausnehmung (60) des Verstellringes (16) eingreift und bevorzugt mittels eines Schlepphebels (61) an den Verstellring (16) gekoppelt ist.

14. Abgasturbolader nach Anspruch 13, dadurch gekennzeichnet, daß die Verstelleinrichtung eine insbesondere parallel zur Rotorwelle (2) im Trägerring (26) gelagerte Welle (56) aufweist, die mit dem Hebel (58) drehfest verbunden ist.

## Claims

1. Exhaust gas turbo charger having a turbine the distributor of which has a ring of guide vanes (20) concentrically arranged about a rotor axis (22) and each pivotable between two end limits (17, 19), having a first retaining ring (34) disposed on the side of a bearing housing (8), in which the guide vanes (20) are each pivotally mounted by means of a first pin, the guide vanes each being pivotally mounted by means of their second pin (44) on the side of the turbine housing (2), and having an adjustment mechanism for setting one of the end limits (17, 19), the guide vanes (20) being freely pivotable, when acted upon by the flow forces, within an angular range of adjustment determined by means of the end limits, the guide apparatus and adjustment mechanism forming an assembly (14), characterized in that the assembly (14) has a second retaining ring (36) which is associated with the turbine housing (2) and serves to pivotally mount the second pins (44) of the guide vanes (20), in that the assembly (14) has an internal diameter greater than the external diameter of the turbine wheel (4), and in that the two retaining rings (34, 36) are connected to each other axially spaced by means of connecting elements (38, 40) to form the flow channel and are in order to accomodate the guide vanes (20).

2. Exhaust gas turbo charger according to claim 1, characterized in that the assembly (14) comprises a carrier ring (26) fixedly connected to the first retaining ring (34), preferably by means of screws (48), on which an adjusting ring (16) is mounted.

3. Exhaust gas turbo charger according to claim 1 or 2, characterized in that the second retaining ring (36) associated with the turbine housing (2) is mounted so as not to make contact with the turbine housing (2).

4. Exhaust gas turbo charger according to one of claims 1 to 3, characterized in that a contact-free labyrinth seal (46) is provided between the turbine housing (2) and the second retaining ring (36).

5. Exhaust gas turbo charger according to claim 2, characterized in that the adjusting ring (16) has projections (18) with radially inwardly directed contact surfaces (17) and radially outwardly pointing abutment surfaces (19), the inner abutment surface (17) and outer abutment surface (19) of two projections (18) adjacent to each in the circumferential direction forming the two end limits which can be selectively adjusted in order to set the angular range of adjustment.

6. Exhaust gas turbo charger according to claim 5, characterized in that the projections (18) provided with the inner contact surface (17) and outer abutment surface (19) are arranged at a spacing from one another in the circumferential direction on the axial end face of the adjusting ring 16, the axial width of the flow channel remaining substantially constant between the projections.

7. Exhaust gas turbo charger according to claim 5 or 6, characterized in that the guide vanes (20) are bent radially inwards towards the rotor shaft (22) on their longitudinal sides (23) facing the adjusting ring (16) at least at their ends (21).

8. Exhaust gas turbo charger according to one of claims 1 to 7, characterized in that part of the bearing housing (8) with a cooling channel (10) is disposed radially within the assembly (14).

9. Exhaust gas turbo charger according to one of claims 1 to 8, characterized in that the turbine housing (2) is connected to the bearing housing (8) via the assembly (14).

10. Exhaust gas turbo charger according to one of claims 1 to 9, characterized in that the two retaining rings (34, 36) are connected to each other by means of screws (40) and spacer sleeves (38) which are arranged in the flow channel.

11. Exhaust gas turbo charger according to one of claims 2, 5, 6, 7 characterized in that the carrier ring (26) has a bracket (52), more particularly integrally connected therewith, for an adjusting motor (54) of the adjustment mechanism.

12. Exhaust gas turbo charger according to one of claims 2, 5, 6, 7, 11 characterized in that the adjusting ring (16) has a stepped cross section and is axially and/or radially rotatably mounted on the carrier ring (26) by means of rolling bodies (24) or a journal bearing.

13. Exhaust gas turbo charger according to one of claims 2, 5, 6, 7, 11, 12 characterized in that the adjustment mechanism has at least one lever (58) which engages in a recess (60) of the adjusting ring (16) and is preferably coupled to the adjusting ring (16) by means of a pull lever (61).

14. Exhaust gas turbo charger according to claim 13, characterized in that the adjustment mechanism comprises a shaft (56) which is more particularly rotatably mounted parallel to the rotor shaft (2) in the carrier ring (26) and is connected for rotation with the lever (58).

**Revendications**

1. Turbo-compresseur sur gaz d'échappement comprenant une turbine dont le distributeur présente une couronne d'aubes directrices (20) disposées concentriquement autour de l'axe (22) du rotor et capables de pivoter entre deux limites de fin de course (17, 19), une première couronne support (34) disposée sur la face latérale d'un carter de palier (8), et dans laquelle les aubes directrices (20) tourillonnent au moyen d'un premier tourillon, les aubes directrices tourillonnant au moyen de leur deuxième tourillon (44) sur la face latérale du carter (2) de la turbine et un dispositif de réglage servant à régler l'une des limites de fin de course (17, 19), les aubes directrices (20) pouvant pivoter librement sous l'action des forces de l'écoulement, dans un intervalle de réglage angulaire qui est prédéterminé au moyen des limites de fin de course, le distributeur et le dispositif de réglage formant un sous-ensemble (14), caractérisé en ce que le sous-ensemble (14) présente une première couronne support (36) qui est associée au carter (2) de la turbine et qui sert au montage des deuxièmes tourillons (44) des aubes directrices (20), en ce que le sous-ensemble (14) possède un diamètre intérieur qui est plus grand que le diamètre extérieur de la roue (4) de la turbine, et en ce que les deux couronnes supports (34, 36) sont assemblées l'une à l'autre, à un certain écartement axial, au moyen d'éléments d'assemblage (38, 40), en formant le canal d'écoulement, et pour recevoir les aubes directrices (20).

2. Turbo-compresseur sur gaz d'échappement selon la revendication 1, caractérisé en ce que le sous-ensemble (14) présente une couronne porteuse (26) assemblée solidairement à la première couronne de support (34), de préférence au moyen de vis (48), couronne sur laquelle tourillonne une couronne de réglage (16).

3. Turbo-compresseur sur gaz d'échappement selon la revendication 1 ou 2, caractérisé en ce que la deuxième couronne de support (36) qui est associée au carter de turbine (2) est agencée sans contact par rapport au carter de turbine (2).

4. Turbo-compresseur sur gaz d'échappement selon l'une des revendications 1 à 3, caractérisé en ce qu'un joint à labyrinthe sans contact (46) est disposé entre le carter de turbine (2) et la deuxième couronne support (36).

5. Turbo-compresseur sur gaz d'échappement selon la revendication 2, caractérisé en ce que la couronne de réglage (16) présente des saillies (18) qui présentent elles-mêmes des surfaces d'appui (17) qui regardent radialement vers l'intérieur et des surfaces de portée (19) qui regardent radialement vers l'éxtérieur, cependant que la surface de portée intérieure (17) et la surface de portée extérieure (19) appartenant à deux saillies (18) adjacentes dans la direction circonférentielle forment toutes deux des limites de fin de course réglables de façon définie qui servent à fixer l'intervalle de réglage angulaire.

6. Turbo-compresseur sur gaz d'échappement selon la revendication 5, caractérisé en ce que les saillies (18) munies de la surface d'appui intérieure (17) et de la surface de portée extérieure (19) sont disposées sur la face frontale axiale de la couronne de réglage (16), à un certain écartement dans la direction circonférentielle, cependant que, entre les saillies, la largeur axiale du canal d'écoulement reste sensiblement constante.

7. Turbo-compresseur sur gaz d'échappement selon la revendication 5 ou 6, caractérisé en ce que les aubes directrices (20) sont coudées radialement vers l'intérieur vers l'axe de rotation (22), le long de leurs bords longitudinaux (23) dirigés vers la couronne de réglage (16), du moins aux extrémités (21).

8. Turbo-compresseur sur gaz d'échappement selon une des revendications 1 à 7, caractérisé en ce que radialement à l'intérieur du sous-ensemble (14) est disposée une partie du carter de palier (8) présentant un canal de refroidissement (10).

9. Turbo-compresseur sur gaz d'échappement selon une des revendications 1 à 8, caractérisé en ce que le carter de turbine (2) est assemblé au carter de palier (8) par l'intermédiaire du sous-ensemble (14).

10. Turbo-compresseur sur gaz d'échappement selon l'une des revendications 1 à 9, caractérisé en ce que les deux couronnes de retenue (34, 36) sont assemblées l'une à l'autre au moyen de vis (40) ainsi que de bagues entretoises (38) qui sont disposées dans le canal d'écoulement.

11. Turbo-compresseur selon l'une des revendications 1, 2, 5, 6, 7, caractérisé en ce que la couronne porteuse (26) présente une console (52) qui est en particulier liée intégralement à cette couronne et destinée à porter un moteur de réglage (54) appartenant au dispositif de réglage.

12. Turbo-compresseur sur gaz d'échappement selon l'une des revendications 2, 5, 6, 7, 11, caractérisé en ce que la couronne de réglage (16) présente une section étagée et est tourillonnée sur la couronne porteuse (26), par une portée axiale et/ou radiale, au moyen de corps roulants (24) ou d'un palier lisse.

13. Turbo-compresseur sur gaz d'échappement selon l'une des revendications 2, 5, 6, 7, 11, 12, caractérisé en ce que le dispositif de réglage comprend au moins un levier (58) qui est engagé dans un évidement (60) de la couronne de réglage (16) et est accouplé de préférence à la couronne de réglage (16) au moyen d'un levier tiré (61).

14. Turbo-compresseur sur gaz d'échappement selon la revendication 13, caractérisé en ce que le dispositif de réglage présente un arbre (56) qui est tourillonné dans la couronne porteuse (26), en particulier parallèlement à l'arbre (2) du rotor, et qui est fixé rigidement en rotation au levier (58).

EP 0 224 083 B1

FIG.1

FIG. 2

FIG.3

FIG.4

FIG.5